# EUROPEAN PATENT APPLICATION

(11) **EP 2 942 699 A1**
(43) Date of publication of application: **11.11.2015**
(21) Application number: 15166455.4
(22) Date of filing: 05.05.2015
(51) Int. Cl.: G06F 3/01, G08B 6/00

(54) **DYNAMIC HAPTIC EFFECT MODIFICATION**

(30) Priority: 07.05.2014 US 201461989827 P; 23.12.2014 US 201414581075
(71) Applicant: Immersion Corporation, San Jose, CA 95134 (US)
(72) Inventor: Stahlberg, Kurt-Eerik, Montreal, QC H2J 2J7 (CA); Ramsay, Erin, Dollard des Omeaux, QC H9A 1K5 (CA); Da Costa, Henry, Montreal, QC H1E 5R9 (CA); Gervais, Eric, Montreal, QC H3W 2E8 (CA)
(74) Representative: Hofstetter, Schurack & Partner

(57) **Abstract**

A system is provided that generates haptic effects using a haptic output device. The system receives a haptic effect definition that defines the haptic effect. The system determines, at run-time, whether the haptic effect definition will produce an output effect as designed/desired using the haptic output device. When it is determined that the haptic effect definition will not produce the output effect as designed/desired, the system modifies, at run-time, the haptic effect definition to ensure that the haptic effect produced corresponds to the designed/desired haptic effect.

## Description

### CROSS-REFERENCE TO RELATED APPLICATIONS:

The present application claims the benefit of U.S. Provisional Application No. 61/989,827, filed May 7, 2013, which is hereby incorporated by reference in its entirety.

### FIELD:

One embodiment is directed generally to haptic effects, and in particular to generating haptic effects using a haptic output device.

### BACKGROUND:

Electronic device manufacturers strive to produce a rich interface for users. Conventional devices use visual and auditory cues to provide feedback to a user. In some interface devices, kinesthetic feedback (such as active and resistive force feedback) and/or tactile feedback (such as vibration, texture, and heat) is also provided to the user, more generally known collectively as "haptic feedback" or "haptic effects." Haptic feedback can provide cues that enhance and simplify the user interface. Specifically, vibration effects, or vibrotactile haptic effects, may be useful in providing cues to users of electronic devices to alert the user to specific events, or provide realistic feedback to create greater sensory immersion within a simulated or virtual environment

Devices, such as mobile devices, touchscreen devices, and personal computers, can be configured to generate haptic effects. In general, calls to embedded hardware capable of generating haptic effects (such as actuators) can be programmed within an operating system ("OS") of the device. These calls specify which haptic effect to play. For example, when a user interacts with the device using, for example, a button, touchscreen, lever, joystick, wheel, or some other control, the OS of the device can send a play command through control circuitry to the embedded hardware. The embedded hardware then produces the appropriate haptic effect.

Haptic feedback has also been increasingly incorporated in portable electronic devices, such as cellular telephones, smartphones, portable gaming devices, and a variety of other portable electronic devices. For example, some portable gaming applications are capable of vibrating in a manner similar to control devices (e.g., joysticks, etc.) used with larger-scale gaming systems that are configured to provide haptic feedback. Further, devices such as smartphones use haptic effects to cause "buttons" on a touchscreen to feel like their mechanical counterparts when selected by a user.

In order to generate vibration effects, many devices utilize some type of actuator/motor or haptic output device. Known actuators used for this purpose include an electromagnetic actuator such as an Eccentric Rotating Mass ("ERM") actuator in which an eccentric mass is moved by a motor and rotates around an axis of rotation. However, because of inertia, the mass in an ERM takes time to get up to the desired rotation speed, and time to wind back down. This "spin up" (or "rise") time and "spin down" (or "fall") time can cause latency in the generation of vibratory type haptic effects, and can degrade the "feeling" of haptic effects. In particular, haptic effects that are designed with a short duration, such as in response to a "keypad" press, can fail to produce a desired haptic effect due to the latency with slow, inexpensive ERMs (i.e., the duration of the effect is shorter than the "spin up"/"spin down" time of the actuator).

### SUMMARY:

One embodiment is a system that generates a haptic effect using a haptic output device. The system receives a haptic effect definition that defines the haptic effect. The system determines, at run-time, whether the haptic effect definition will produce an output effect as designed/desired using the haptic output device. When it is determined that the haptic effect definition will not produce the output effect as designed/desired, the system modifies, at run-time, the haptic effect definition to ensure that the haptic effect produced corresponds to the designed/desired haptic effect. The invention is further directed to a computer-implemented method for generate a haptic effect using a haptic output device as defined by the features of claim 1 and computer-readable medium with the features of claim 11.

### BRIEF DESCRIPTION OF THE DRAWINGS:

Further embodiments, details, advantages, and modifications will become apparent from the following detailed description of the preferred embodiments, which is to be taken in conjunction with the accompanying drawings.
Fig. 1 is a block diagram of a haptically-enabled system in accordance with one embodiment of the present invention.
Fig. 2 illustrates haptic effect modification performed by a known enhanced ERM support ("EES") implementation.
Fig. 3 illustrates haptic effect modification by a strength priority mode in accordance with one embodiment of the present invention.
Fig. 4 is a flow diagram of the functionality of the system of Fig. 1 when generating haptic effects with dynamic effect modulation in accordance with one embodiment of the present invention.
Fig. 5 is a flow diagram of the functionality of the system of Fig. 1 when generating haptic effects in accordance with one embodiment of the present invention.
Fig. 6 is a flow diagram of the functionality of the system of Fig. 1 when generating haptic effects with dynamic effect modulation in accordance with one embodiment of the present invention.

### DETAILED DESCRIPTION:

One embodiment is a system and drive circuit for an actuator that dynamically processes a haptic effect definition in order to account for actuator properties and to ensure that a defined magnitude of the haptic effect is reached by the actuator. The system can determine whether the actuator can reach the defined magnitude within a defined duration of the haptic effect. The system can generate a new duration based on actuator performance characteristics and the desired magnitude. The system can then play the haptic effect using the new duration so that the desired magnitude is reached upon playback.

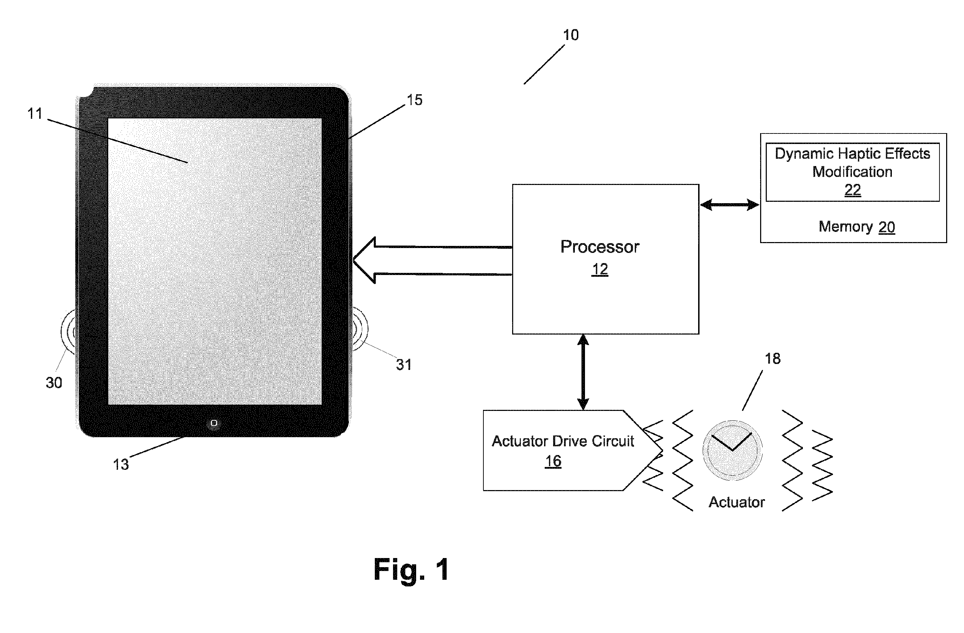

Fig. 1 is a block diagram of a haptically-enabled system 10 in accordance with one embodiment of the present invention. System 10 includes a touch sensitive surface 11 or other type of user interface mounted within a housing 15, and may include mechanical keys/buttons 13. Internal to system 10 is a haptic feedback system that generates vibrations 30, 31 on system 10. In one embodiment, the vibrations are generated on housing 15, touch surface 11, or any other portion of system 10. In various embodiments, not all elements shown in Fig. 1 are required for implementation.

The haptic feedback system includes a processor or controller 12. Coupled to processor 12 is a memory 20 and an actuator drive circuit 16, which is coupled to an actuator 18. Actuator 18 can be any type of actuator, including an actuator with a rotating mass, and in one embodiment is an Eccentric Rotating Mass ("ERM") actuator. Actuator 18 also may be, for example, an electric motor, an electro-magnetic actuator, a voice coil, a shape memory alloy, an electro-active polymer, a solenoid, a linear resonant actuator ("LRA"), a piezoelectric actuator, a high bandwidth actuator, an electroactive polymer ("EAP") actuator, an electrostatic friction display, or an ultrasonic vibration generator.

Processor 12 may be any type of general purpose processor, or could be a processor specifically designed to provide haptic effects, such as an application-specific integrated circuit ("ASIC"). Processor 12 may be the same processor that operates the entire system 10, or may be a separate processor. Processor 12 can decide what haptic effects are to be played and the order in which the effects are played based on high level parameters. In general, the high level parameters that define a particular haptic effect include magnitude, frequency and duration. Low level parameters such as streaming motor commands could also be used to determine a particular haptic effect. A haptic effect may be considered "dynamic" if it includes some variation of these parameters when the haptic effect is generated or a variation of these parameters based on a user's interaction.

Processor 12 outputs the control signals to actuator drive circuit 16, which includes electronic components and circuitry used to supply actuator 18 with the required electrical current and voltage (i.e., "motor signals") to cause the desired haptic effects. System 10 may include more than one actuator 18, and each actuator may include a separate drive circuit 16, all coupled to a common processor 12. Memory device 20 can be any type of storage device or computer-readable medium, such as random access memory ("RAM") or read-only memory ("ROM"). Memory 20 stores instructions executed by processor 12. Among the instructions, memory 20 includes a dynamic haptic effects modification module 22 which are instructions that, when executed by processor 12, dynamically modify haptic effects based on system performance, as disclosed in more detail below. Memory 20 may also be located internal to processor 12, or any combination of internal and external memory.

Touch surface 11 recognizes touches, and may also recognize the position and magnitude of touches on the surface. The data corresponding to the touches is sent to processor 12, or another processor within system 10, and processor 12 interprets the touches and in response generates haptic effect signals. Touch surface 11 may sense touches using any sensing technology, including capacitive sensing, resistive sensing, surface acoustic wave sensing, pressure sensing, optical sensing, etc. Touch surface 11 may sense multi-touch contacts and may be capable of distinguishing multiple touches that occur at the same time. Touch surface 11 may be a touchscreen that generates and displays images for the user to interact with, such as keys, dials, etc., or may be a touchpad with minimal or no images.

System 10 may be a handheld device, such a cellular telephone, personal digital assistant ("PDA"), smartphone, computer tablet/pad, gaming console, etc., or may be any other type of device that includes a haptic effect system that includes one or more actuators. System 10 may also be a wearable device (e.g., a bracelet, armband, glove, jacket, vest, pair of glasses, shoes, belt, etc.) that includes one or more actuators that generate haptic effects. The user interface may be a touch sensitive surface, or can be any other type of user interface such as a mouse, touchpad, mini-joystick, scroll wheel, trackball, game pads or game controllers, etc. In embodiments with more than one actuator, each actuator may have a different rotational capability in order to create a wide range of haptic effects on the device.

Embodiments provide a haptic playback system that can, by referring to the knowledge of the performance of the system or "target device," evaluate whether a haptic effect will produce output as designed/desired, and, if not, the system can modify the haptic effect on the fly (i.e., at run time) to ensure that the haptic effect produced comes as close as possible to the designed/desired effect. The system enables a haptic effect designer to create a generic set of haptic effects for all types of actuators without having to design a different set of effects for each actuator model used by a customer or resorting to lowest common denominator tactics. Resorting to lowest common denominator tactics can include, for example, the haptic effects designer designing effects with the worst case in mind (e.g., designing effects for the worst known operating or performing haptic output device).

In order to generate vibration effects, many devices utilize some type of actuator/motor or haptic output device. Known actuators used for this purpose include an electromagnetic actuator such as an ERM actuator in which an eccentric mass is moved by a motor and rotates around an axis of rotation. For different types of actuators, and even within the same types of actuators, the rise and fall times can vary.

Known enhanced ERM support ("EES") implementations, in order to avoid cascading in ERM actuators, prioritize effect duration over effect strength (e.g., in a "duration priority" mode) as shown, for example, in U.S. Patent Application No. 14/048,374, filed October 8, 2013, and entitled "Generating Haptic Effects While Minimizing Cascading," which is hereby incorporated by reference in its entirety.

However, such known enhanced ERM support ("EES") implementations may not be effective to ensure that short duration haptic effects are played as intended by their respective haptic effect designers. For example, if a short effect is designed for a quick actuator, it most likely will not play at all on a slow actuator (e.g., due to the slow actuator's slow "rise time"). If a short effect is designed for a slow actuator, it will most likely feel very strong and/or long on a quick actuator (e.g., due to the quick actuator's quick "rise time"). However, there may be a desire for consistency to enable "design once, run anywhere" among different types of actuators.

Embodiments provide a "strength priority" mode into the system that enables the haptic effect designer to set the haptic effect magnitude with the knowledge that the system will play the haptic effect with that magnitude by increasing the effect duration set by the designer if the actual actuator used by the customer device will not reach the set magnitude within the original duration.

Because of the slow "rise time" of some actuators, a short haptic effect (i.e., short duration effect) might not be long enough to provide meaningful vibration, while a long haptic effect may produce an unpleasant sensation on an actuator with a quick "rise time." System 10 can store information about the rise time of the actuator that will generate the haptic effect (e.g., actuator 18) to take that information and calculate the shortest time it will take the actuator to reach the given magnitude level. By comparing this shortest time to the duration of the effect, system 10 can verify whether the actuator would reach the desired magnitude level or not. If not, system 10 can make the duration match the shortest time the actuator needs to reach that level, and thus ensure the magnitude level is reached regardless of the original duration. In some embodiments, system 10 can be responsible for making sure all effects can be felt while still being as close to the intended duration as possible.

For example, if a haptic effect designer, using, for example, TouchSense^{®} from Immersion Corp., wants to create an extremely sharp click-type confirmation effect that is "strong-ish," she can set the duration to 1 ms and magnitude level to, for example, 50% of the maximum. System 10 will then, during playback, evaluate a predicted duration for that effect to be played by actuator 18 and reach the desired magnitude, and modify the duration by extending the duration if the predicted duration is longer than the original duration, thereby ensuring that the effect will reach the desired magnitude during playback by actuator 18. In this example, possible modified durations for some actuator types in different devices are provided as follows: 50 ms for a slow eccentric rotating mass ("ERM") motor actuator. 15 ms for a linear resonant actuator ("LRA"), and 2 ms for a piezo actuator. In this example, the vibration at its strongest peak will be approximately the same level of strength on every device.

Embodiments are directed to the functionality of designing haptic effects once, and deploying the same effects on different actuators with possibly very different response times, but cause the haptic effects to still "feel" nearly identical. For example, if the designed haptic effect that results in, say, 20% of maximum magnitude on a fast actuator, it is possible that the effect will not be noticeable on a slow actuator. The slower actuator would need a significantly longer effect duration to become noticeable and reach 20% of maximum magnitude. Therefore, embodiments use rise curve information for the actuator to determine how long it will take the actuator to reach the effect magnitude. If that time is longer than the haptic effect's duration, embodiments increase the haptic effect's duration so the actuator can eventually reach the haptic effect's desired magnitude.

In some embodiments, a haptic effect definition style parameter can be used to allow a designer to select a "strong" or "sharp" effect style (e.g., the style parameter can be included in the haptic effect definition). In such embodiments, system 10 will prioritize strength over duration for strong style effects, while prioritizing duration over strength for sharp style effects. Therefore, a strong style short effect can have a duration set to the shortest (or close to the shortest) it can be on any hardware while still reaching the designer's desired magnitude. For strong style effects, the duration will automatically be adjusted to give the actuator enough time to reach the requested magnitude. Examples of possible final/adjusted durations for a haptic effect having an original duration of 1 ms and a magnitude of 3,000 out of 10,000 (e.g., 30% of maximum magnitude) are provided for the following actuators: 1 ms effect duration for a piezo actuator; 15 ms effect duration for an LRA actuator; 35 ms effect duration for a bar ERM; and 80 ms effect duration for a coin ERM.

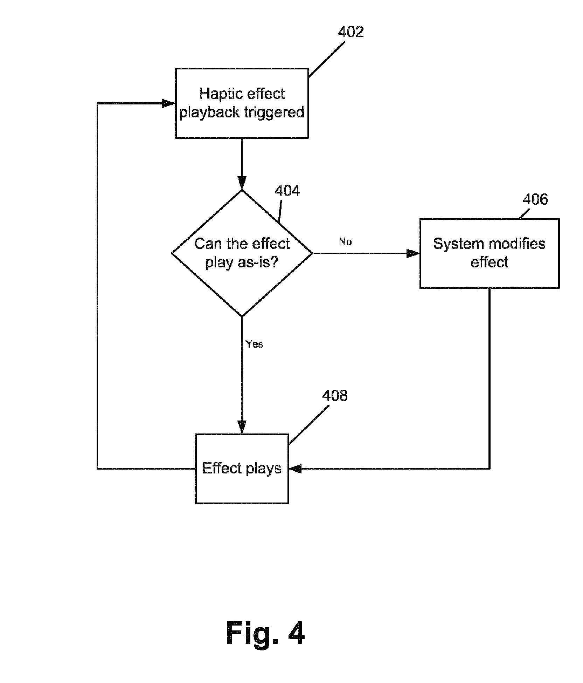

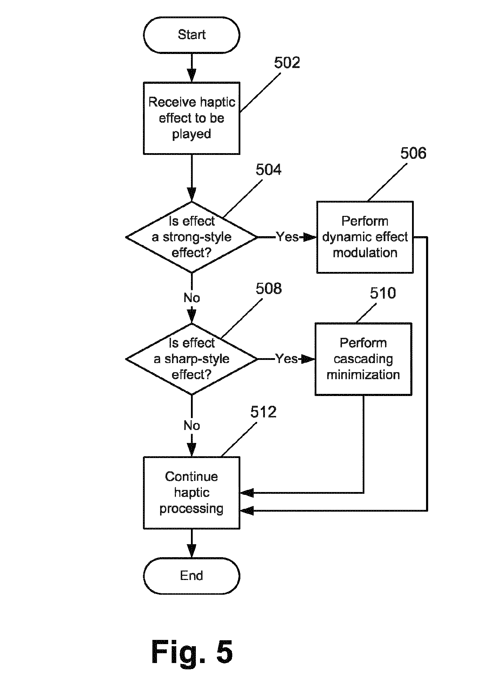

Some embodiments add style detection to EES preprocessing, as shown, for example, in Fig. 5 described below, and add the ability to measure and adjust effect duration, as shown, for example, in Figs. 4-6 described below. Embodiments will work with both MagSweep effects and Periodic effects, and will support all types of actuators. For example, a parameterized vibration definition can define the envelope/shape of a haptic effect, and such a definition can include parameters that define the haptic effect (e.g., duration, frequency, magnitude, etc.). This definition can also be in accordance with the "TouchSense^{®} 3000 Haptic Design Kit" from Immersion Corp., such that the haptic effect is defined by a definition shape formed by an envelope that includes three basis parts/regions or effect magnitudes: "impulse", "sustain" and "fade" that are formed from a MagSweep or Periodic basis effect. Other effect types such as Timelines and Interpolated effects are composed of basis effects.

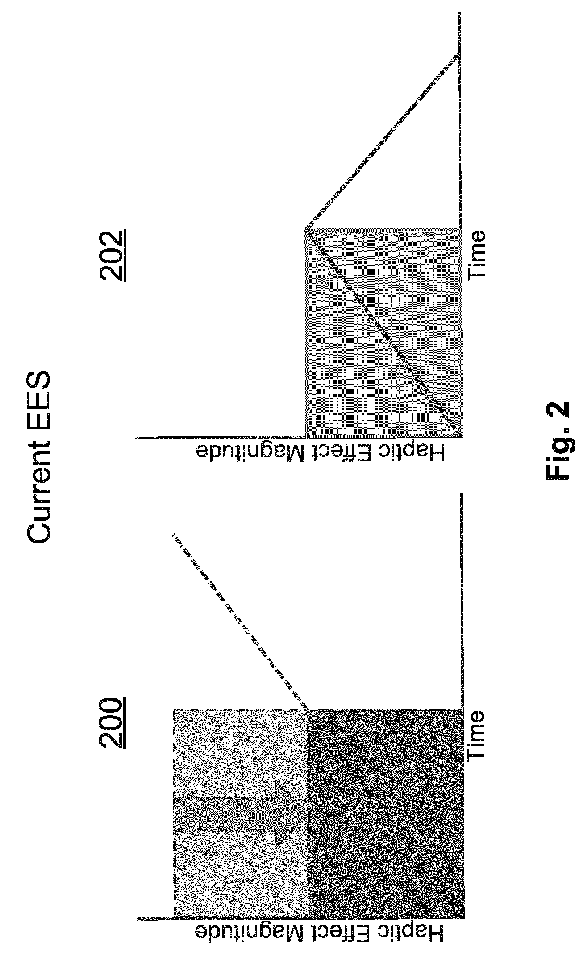

Fig. 2 illustrates haptic effect modification performed by a known EES implementation. Graph 200 is a graph of Haptic Effect Magnitude v. Time for a haptic effect. Graph 202 is a graph of Haptic Effect Magnitude v. Time of the haptic effect when modified by the known EES implementation. The known EES implementation can include a "duration priority" mode which modifies the haptic effect by reducing the magnitude and keeping the duration constant (i.e., prioritizes haptic effect duration over haptic effect strength (or magnitude)), as shown in graphs 200/202, in order to, for example, avoid cascading in ERM actuators.

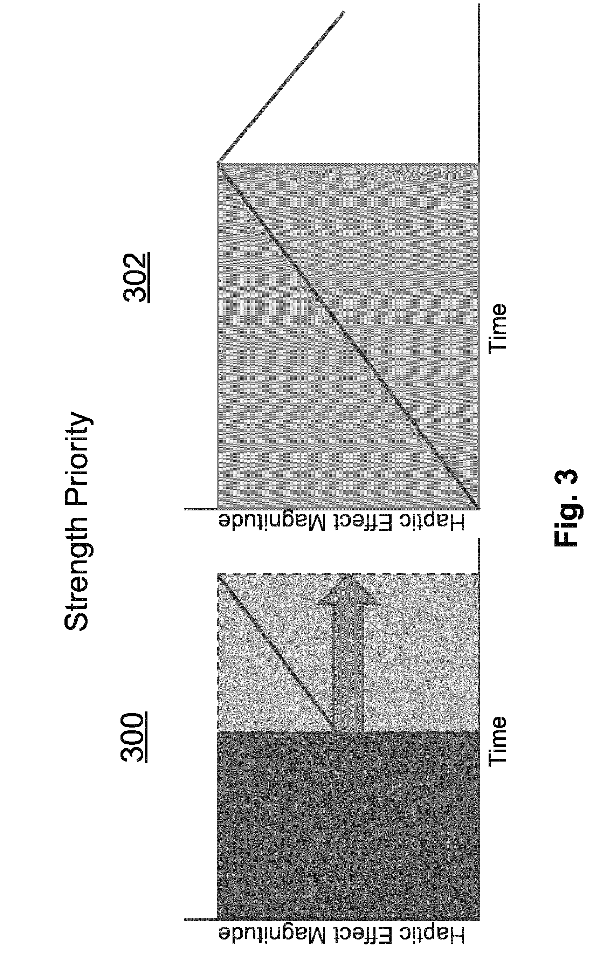

Fig. 3 illustrates haptic effect modification by a strength priority mode in accordance with one embodiment of the present invention. Graph 300 is a graph of Haptic Effect Magnitude v. Time for a haptic effect. Graph 302 is a graph of Haptic Effect Magnitude v. Time of the haptic effect modified by a strength priority mode as disclosed herein. As show in graph 302, the strength priority mode extends the duration of the haptic effect to reach the desired magnitude.

Fig. 4 is a flow diagram of the functionality of the system of Fig. 1 when generating a haptic effect with dynamic effect modification in accordance with one embodiment of the present invention. In one embodiment, the functionality of Fig. 4, and/or Figs. 5 and/or 6 below, is implemented by software (e.g., dynamic haptic effects modification module 22) stored in memory or other computer readable or tangible medium, and executed by a processor. In other embodiments, the functionality may be performed by hardware (e.g., through the use of an application specific integrated circuit ("ASIC"), a programmable gate array ("PGA"), a field programmable gate array ("FPGA"), etc.), or any combination of hardware and software.

At 402, haptic effect playback is triggered. Haptic effect playback can be triggered when the haptic effect is received in the form of a parameterized vibration definition that defines the envelope/shape of the haptic effect. The definition includes parameters that define the haptic effect, including duration, frequency, magnitude, etc. In one embodiment, the definition is in accordance with the "TouchSense^{®} 3000 Haptic Design Kit" from Immersion Corp. In this embodiment, the haptic effect is defined by a definition shape formed by an envelope that includes three basis parts/regions or effect magnitudes: "impulse", "sustain" and "fade" that are formed from a MagSweep or Periodic basis effect. Other effect types such as Timelines and Interpolated effects are composed of basis effects. In other embodiments, the definition is in general of an effect that is relatively maintained throughout the functionality of Fig. 4.

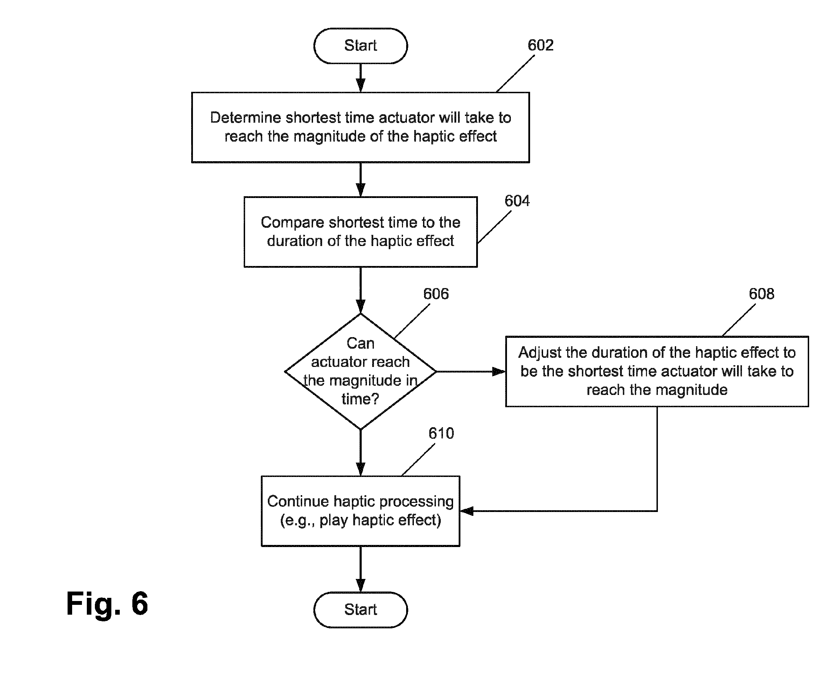

At 404, it is determined whether the haptic effect can be played as-is (i.e., whether the haptic effect can be played without modification). For example, system 10 can determine whether actuator 18 within system 10 (i.e., the target device) is capable of playing the haptic effect. To determine whether the haptic effect can be played as-is, system 10 can determine the shortest time that it will take actuator 18 within system 10 to reach the desired magnitude of the haptic effect (as specified in the haptic effect definition) and compare this shortest time with the desired duration of the haptic effect (as defined in the haptic effect definition). If the shortest time is greater than the desired duration, then system 10 can determine that the haptic effect cannot play as-is, otherwise system 10 can determine that the haptic effect can play as-is. Determining whether the haptic effect can play as is can be performed, for example, as discussed below with respect to Fig. 6. When it is determined that the haptic effect can be played as-is, functionality continues at 406. Otherwise, functionality continues at 408.

At 406, the haptic effect is modified so that the desired magnitude can be reached. Modifying the haptic effect definition can include adjusting the duration value of the definition based on an estimate or measurement of one or more performance characteristics of actuator 18 within system 10 such as, for example, the shortest time duration determined at 404. The performance characteristic(s) of actuator 18 can be determined based on a rise curve and/or a fall curve of actuator 18. The performance characteristic(s) of actuator 18 can be determined, additionally or alternatively, based on adjustable active braking capabilities of actuator 18 (e.g., active brake time - the ability of the actuator motor to be slowed to rest quicker by applying a reverse voltage - which can be factored into the actuator's fall curve). This can include revising the haptic effect to match the estimated or measured characteristics of actuator 18 by determining the desired haptic effect and determining the actual effect the actuator is capable of playing based on its characteristics. The "new" effect can be either the same as, or a duration-extended version of, the original effect. For example, if the haptic effect definition is very strong for a short duration, the actuator may not be able to spin up so quickly. Therefore, the haptic effect definition can be modified to accommodate the actuator, such as extending the duration, before the haptic effect is played. In one embodiment, functionality at 406 includes "clipping" the effect based on the desired effect to be played and based on the actuator rise curve and/or fall curve. Such clipping can occur at the basis effect level and ensure that the actuator can achieve the desired magnitude at the end of the effect's duration.

At 408, the processed haptic effect is initiated/played by sending the processed signal to the drive circuit, which causes the actuator to create a vibratory haptic effect.

Fig. 5 is a flow diagram of the functionality of the system of Fig. 1 when generating haptic effects in accordance with one embodiment of the present invention.

At 502, the haptic effect is received in the form of a parameterized vibration definition that defines the envelope/shape of the haptic effect. As with 402 of Fig. 4, the definition includes parameters that define the haptic effect, including duration, frequency, magnitude, etc. In other embodiments, the definition is in general of an effect that is relatively maintained throughout the functionality of Fig. 5.

At 504, system 10 (e.g., dynamic haptic effect modification module 22 of system 10) determines whether the haptic effect is a strong-style effect. In some embodiments, the haptic effect definition includes a style parameter that indicates whether the haptic effect is a strong-style effect. If yes, functionality continues at 506. Otherwise, functionality continues at 508.

At 506, dynamic effect modulation is performed as shown, for example, in Figs. 4 and 6.

At 508, system 10 determines whether the haptic effect is a sharp-style haptic effect. The haptic effect definition can include a style parameter that indicates whether the haptic effect is a sharp-style effect, which can be the same style parameter as discussed above with 504, or a different parameter. If yes, functionality continues at 510. Otherwise, functionality continues at 512.

At 510, system 10 performs cascading minimization processing. Cascading minimization processing can include adjusting the strength (e.g., magnitude) of the haptic effect while maintaining the duration of the haptic effect to generate haptic effects with minimal or no cascading. Cascading minimization processing can be performed as shown, for example, in U.S. Patent Application No. 14/048,374, discussed above.

At 512, haptic processing continues. For example, additional processing can optionally be performed and/or the haptic effect can be played taking into account any transformations applied to the haptic effect at 506, 508, and/or 510 (e.g. modifications of the haptic effect definition values).

Fig. 6 is a flow diagram of the functionality of the system of Fig. 1 when generating haptic effects with dynamic effect modulation in accordance with one embodiment of the present invention.

At 602, system 10 (e.g., dynamic haptic effect modification module 22 of system 10) determined the shortest time actuator 18 within system 10 will take to reach the desired magnitude of the haptic effect (e.g., as defined in the haptic effect definition). As with 402 of Fig. 4, the haptic effect can be defined in the form of a parameterized vibration definition that defines the envelope/shape of the haptic effect. In other embodiments, the definition is in general of an effect that is relatively maintained throughout the functionality of Fig. 6.

The shortest time actuator 18 will take to reach the desired magnitude of the haptic effect can be determined, for example, based on a rise curve associated with actuator 18 (i.e., the target actuator).

In some embodiments, memory 20 within system 10 can store predetermined rise curves associated with certain actuator types and/or models. In some such embodiments, memory 20 can include predetermined rise curves of the actuators (i.e., actuator 18) within and/or connected to system 10. In some embodiments, system 10 can determine (e.g., by estimating or measuring) the rise curve of any such actuators and store the determined rise curves in memory 20. In some embodiments, once a rise curve has been predetermined or determined for a particular actuator, the rise curve remains constant and is not reevaluated/modified.

For example, the rise curve of actuator 18 can be measured by system 10 and stored in memory 20. In another example, the rise curve of actuator 18 can be set to an estimated rise curve that, for example, is estimated based on the type of actuator 18. In yet another example, the rise curve of actuator 18 can be predetermined external to system 10 and stored in memory 20.

The rise curve can provide a mapping between time and vibration strength of an actuator. The rise curve can be plotted on a time-strength graph and define a curve going from (0, 0) to (time_to_max, max_vibration). The curve can be any shape and does not have to be straight. To estimate how long it takes to get up to a certain strength from a lower strength the system can look up the strength values on the curve and measure the difference in time between them. A fall curve is the same as the rise curve except going from maximum strength to zero. The rise curve and fall curve of an actuator can be very different from each other.

At 604, system 10 compares the shortest time determined at 602 to the desired duration of the haptic effect (as defined in the haptic effect definition).

At 606, system 10 determines whether actuator 18 can reach the desired magnitude in time (i.e., within the desired duration). If yes (i.e., the shortest time is less than or equal to the desired duration), then functionality continues at 610. Otherwise (i.e., the shortest time is greater than the desired duration), functionality continues at 608.

At 608, system 10 adjusts the duration of the haptic effect to be the shortest time actuator 18 will take to reach the desired magnitude. For example, system 10 can transform the haptic effect definition such that, when played by actuator 18, the haptic effect will reach the desired strength (e.g., magnitude) by prioritizing strength over duration and extending the defined duration to the shortest time determined at 602, thereby ensuring that, when played by actuator 18, the haptic effect reaches the desired strength.

At 610, haptic processing continues. For example, additional processing can optionally be performed and/or the haptic effect can be played taking into account any transformations applied to the haptic effect at 608 (e.g., modifications of the haptic effect definition values).

As disclosed, embodiments implement a system that dynamically preprocesses a haptic effect prior to playing the effect in order to account for actuator properties. The pre-processing includes extending the duration of the haptic effect to ensure that the desired magnitude is reached by the actuator. The system can then play the haptic effect using the new duration.

The present invention is further directed to a computer-readable medium comprising the following items and features:
Item 1: A computer-readable medium having instructions stored thereon that,
when executed by a processor, cause the processor to generate a haptic effect using a haptic output device, the generating comprising:
   receiving a haptic effect definition that defines the haptic effect;
   determining, at run-time, whether the haptic effect definition will produce an output effect as designed/desired using the haptic output device; and
   when it is determined that the haptic effect definition will not produce the output effect as designed/desired, modifying, at run-time, the haptic effect definition to ensure that the haptic effect produced corresponds to the designed/desired haptic effect.
Item 2: The computer-readable medium of item1, wherein a haptic effect designer creates a generic set of haptic effects for all types of haptic output devices without designing a different set of effects for each haptic output device model used by a customer and without resorting to lowest common denominator tactics.
Item 3: The computer-readable medium of item 1,
   wherein generic haptic effects are designed for use across a plurality of types of haptic output devices, the designing being performed irrespective of differences between haptic output device types or models, and
   wherein the generating ensures that an output effect produced for any of the generic haptic effects on any of the types of haptic output devices comes as close as possible to the designed effect.
Item 4: The computer-readable medium of item 1, wherein the determining is based on a performance characteristic of the haptic output device.
Item 5: The computer-readable medium of item 4, wherein the performance characteristic is based on a rise curve or a fall curve associated with the haptic output device.
Item 6: The computer-readable medium of item 4,
   wherein the haptic effect definition comprises a duration parameter and a magnitude parameter,
   wherein the performance characteristic is a shortest time duration in which the haptic output device should reach the magnitude parameter, and wherein the determining comprises determining that the haptic effect definition will not produce the output effect as designed/desired when the shortest time duration is greater than the duration parameter.
Item 7: The computer-readable medium of item 6, wherein the modifying comprises setting the duration value to the determined shortest time duration. Item 8: The computer-readable medium of item 1, wherein the modified haptic effect is played on the haptic output device.
Item 9: The computer-readable medium of item 8, wherein the haptic output device is an actuator.
Item 10: The computer-readable medium of item 1, wherein the haptic effect definition comprises a parameterized vibration definition that defines an envelope of the haptic effect.
Item 11: The computer-readable medium of item 10, wherein the parameterized vibration definition comprises one or more parameters comprising at least one of duration, frequency or magnitude.

Several embodiments are specifically illustrated and/or described herein. However, it will be appreciated that modifications and variations of the disclosed embodiments are covered by the above teachings and within the purview of the appended claims.

## Claims

1. A computer-implemented method for generate a haptic effect using a haptic output device, the computer-implemented method comprising:
receiving a haptic effect definition that defines the haptic effect;
determining, at run-time, whether the haptic effect definition will produce an output effect as designed/desired using the haptic output device; and
when it is determined that the haptic effect definition will not produce the output effect as designed/desired, modifying, at run-time, the haptic effect definition such that the haptic effect produced corresponds to the designed/desired haptic effect.

2. The computer-implemented method of claim 1, wherein a haptic effect designer creates a generic set of haptic effects for all types of haptic output devices without designing a different set of effects for each haptic output device model used by a customer and without resorting to lowest common denominator tactics.

3. The computer-implemented method of claim 1,
wherein generic haptic effects are designed for use across a plurality of types of haptic output devices, the designing being performed irrespective of differences between haptic output device types or models, and
wherein the generating ensures that an output effect produced for any of the generic haptic effects on any of the types of haptic output devices comes as close as possible to the designed effect.

4. The computer-implemented method of claim 1, wherein the determining is based on a performance characteristic of the haptic output device.

5. The computer-implemented method of claim 4, wherein the performance characteristic is based on a rise curve or a fall curve associated with the haptic output device.

6. The computer-implemented method of claim 4,
wherein the haptic effect definition comprises a duration parameter and a magnitude parameter,
wherein the performance characteristic is a shortest time duration in which the haptic output device should reach the magnitude parameter, and
wherein the determining comprises determining that the haptic effect definition will not produce the output effect as designed/desired when the shortest time duration is greater than the duration parameter.

7. The computer-implemented method of claim 6, wherein the modifying comprises setting the duration value to the determined shortest time duration.

8. The computer-implemented method of claim 1, wherein the modified haptic effect is played on the haptic output device.

9. The computer-implemented method of claim 1, wherein the haptic effect definition comprises a parameterized vibration definition that defines an envelope of the haptic effect.

10. The computer-implemented method of claim 9, wherein the parameterized vibration definition comprises one or more parameters comprising at least one of duration, frequency or magnitude.

11. A computer-readable medium having instructions stored thereon that, when executed by a processor, cause the processor to implement a method according to one of claims 1 to 10.

12. A system for generating a haptic effect, the system comprising:
a memory configured to store a dynamic haptic effect modification module;
a processor configured to execute the dynamic haptic effect modification module stored on the memory; and
a haptic output device,
wherein the dynamic haptic effect modification module is configured to receive a haptic effect definition that defines the haptic effect;
wherein the dynamic haptic effect modification module is further configured to determine, at run-time, whether the haptic effect definition will produce an output effect as designed/desired using the haptic output device; and
wherein the dynamic haptic effect modification module is further configured to, when it is determined that the haptic effect definition will not produce the output effect as designed/desired, modify, at run-time, the haptic effect definition such that the haptic effect produced corresponds to the designed/desired haptic effect.

13. The system of claim 12,
wherein the determining is based on a performance characteristic of the haptic output device;
wherein the performance characteristic is based on a rise curve or a fall curve associated with the haptic output device; or
wherein the haptic effect definition comprises a duration parameter and a magnitude parameter,
wherein the performance characteristic is a shortest time duration in which the haptic output device should reach the magnitude parameter,
wherein the determining comprises determining that the haptic effect definition will not produce the output effect as designed/desired when the shortest time duration is greater than the duration parameter; and
wherein the modifying comprises setting the duration value to the determined shortest time duration.

14. The system of claim 12,
wherein the modified haptic effect is played on the haptic output device; and
wherein the haptic output device is an actuator.

15. The system of claim 12, wherein the haptic effect definition comprises a parameterized vibration definition that defines an envelope of the haptic effect; and wherein the parameterized vibration definition comprises one or more parameters comprising at least one of duration, frequency or magnitude.
